(19) Europäisches Patentamt
European Patent Office
Office européen des brevets

(11) **EP 4 403 793 A1**

(12) **EUROPEAN PATENT APPLICATION**

(43) Date of publication:
**24.07.2024   Bulletin 2024/30**

(51) International Patent Classification (IPC):
*F16F 7/104* (2006.01)        *F16F 15/00* (2006.01)

(21) Application number: **24151453.8**

(52) Cooperative Patent Classification (CPC):
**F16F 7/104; F16F 15/002**

(22) Date of filing: **11.01.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2023   US 202363438496 P**
**10.01.2024   US 202418409689**

(71) Applicant: **Fox Factory, Inc.**
**Duluth, GA 30097 (US)**

(72) Inventors:
• **Borgers, Bjorn**
  **Duluth (US)**
• **Andrew, Fraser**
  **Duluth (US)**
• **Christman, Keith**
  **Duluth (US)**
• **Randall, Connor**
  **Duluth (US)**

(74) Representative: **Greaves Brewster LLP**
**Copa House**
**Station Road**
**Cheddar, Somerset BS27 3AH (GB)**

(54) **TUNED MASS DAMPER**

(57)      A vehicle (50) comprising a tuned mass damper (TMD) (100), which tuned mass damper comprises:
a mass (101);
at least one spring (102) coupled with said mass, said at least one spring having a spring rate (K); and
a damper to dampen a motion of said mass, said damper comprising a damping coefficient (C), wherein at least one of said spring rate and said damping coefficient are adjustable during the vehicle's operation to modify a frequency damped by said TMD.

**FIG. 1A**

EP 4 403 793 A1

**Description**

CROSS REFERENCE

This application Claims priority from U.S. Provisional Patent Application No. 63/438,496 filed on January 11, 2023, and from U.S. Patent Application No. 18/409,689 filed on January 10, 2024.

TECHNICAL FIELD

Embodiments of the invention generally relate to component frequency damping. Some embodiments relate to a vehicle comprising a tuned mass damper. Some embodiments relate to a suspension-inclusive device comprising a tuned mass damper. Some embodiments related to a tuned mass damper.

BACKGROUND

During normal operations, a vehicle is propelled across terrain. During this action, the vehicle can produce unwanted oscillation and/or frequency vibrations that fall within the realm of frequencies that are known to cause humans increased stress and fatigue. Sometimes, the unwanted oscillation and/or frequency vibrations are based on a vehicle feature and as such, can be accounted for during the designing and building. However, as the vehicle traverse's different terrain, new and unaccounted for oscillation and/or frequency vibrations of differing wavelengths can occur. These new and unaccounted for oscillation and/or frequency vibrations can quickly introduce fatigue, stress, and the like into the vehicle user. Trying to foresee and address these new and unaccounted for oscillation and/or frequency vibrations during the design and/or manufacture is not possible due to the nearly infinite varieties and combinations of body types, terrain types, weather, location, vehicle modifications, and the like. Thus, designers and builders are constantly searching for ways to address both the accounted for and the unaccounted for oscillation and/or frequency vibrations.

SUMMARY OF THE INVENTION

According to some embodiments there is provided a tuned mass damper (TMD). The TMD may comprise a mass. The TMD may comprises at least one spring coupled with said mass, said at least one spring having a spring rate. The TMD may comprise a damper to dampen a motion of said mass, said damper comprising a damping coefficient. At least one of said spring rate and said damping coefficient may be adjustable during a vehicle's operation to modify a frequency damped by said TMD.

In some embodiments both said spring rate and said damping coefficient may adjustable during said vehicle's operation to modify said frequency damped by said TMD.

In some embodiments the TMD may further comprise a controller configured to receive sensor information and determine said modified frequency.

In some embodiments the TMD may further comprise an active component coupled with said TMD. The active component may be configured to electronically adjust at least one of said spring rate and said damping coefficient.

In some embodiments the at least one spring may be an air spring.

In some embodiments the spring rate of said air spring may be adjusted by changing a volume of said air spring.

In some embodiments the spring rate of said air spring may adjusted by changing a pressure of a gas in said air spring.

In some embodiments the damper may be a fluid.

In some embodiments the damping coefficient of said fluid may be adjusted by modifying a flow rate through a flow port in said mass. The flow rate may be controlled or modified by an active valve.

In some embodiments the damper may be a smart fluid with at least one adjustable property to change said damping coefficient.

In some embodiments the smart fluid may be selected from a group consisting of: a magnetorheological (MR) fluid and an electrorheological (ER) fluid.

In some embodiments the TMD may be coupled with a vehicle at a location selected from a group consisting of: externally, internally, and integrated.

In some embodiments the TMD may be coupled with a shock assembly and may be configured to act as a fluid reservoir and said TMD.

In some embodiments said mass may comprise a sliding surface. The mass may comprise a purposely oriented magnet stack. The damper may be electromagnetic, such that said TMD is configured to provide a tuned damping and to harvest energy with a movement of said mass.

In some embodiments said harvested energy may be provided to a component other than said TMD.

According to some embodiments there is provided a tuned mass damper (TMD). The TMD may comprise a mass. At least a portion of said mass may be a damping fluid to dampen a motion of said mass. The damping fluid may have a damping coefficient. There may be at least one spring coupled with said mass. The at least one spring may have a spring rate.

In some embodiments at least one of said spring rate and said damping coefficient may be adjustable during said vehicle's operation to modify said frequency damped by said TMD.

In some embodiments the damping fluid may be shared from a shock assembly.

In some embodiments the damper may comprise at least one semi-active valve.

According to some embodiments there is provided a tuned mass damper (TMD). The TMD may comprise a mass. The mass may comprise a sliding surface. The mass may comprise a purposely oriented magnet stack. The TMD may comprise at least one spring coupled with said mass. The at least one spring may have a spring rate. The TMD may comprise an electromagnetic damper to dampen a motion of said mass. The electromagnetic damper may comprise a damping coefficient. At least one of said spring rate and said damping coefficient may be adjustable during a vehicle's operation to modify a frequency damped by said TMD. The TMD may be configured to harvest energy with a movement of said mass.

According to some embodiments there is provided a suspension-inclusive device comprising a tuned mass damper which has any of the features of the tuned mass damper set out above, or as described or as claimed anywhere herein. The suspension-inclusive device may comprise an exoskeleton, a seat frame, a prosthetic, an orthotic, a suspended floor, or a vehicle component for example. The vehicle component may comprise a shock assembly, a fork, a handlebar, or a vehicle frame, for example. The tuned mass damper may be integrated into the suspension-inclusive device and the vehicle component.

According to some embodiments there is provided a vehicle comprising a tuned mass damper as set out in any of the statements above, or as described or as claimed anywhere herein. The vehicle may be a bicycle, a motorized bicycle, a motorcycle, a watercraft (e.g., boat, jet ski, PWC, etc.), a snow machine, a single wheeled vehicle, a multi-wheeled vehicle, a side-by-side, an on-road and/or off-road vehicle, an aircraft, a personal light electric vehicle (PLEV), or the like. In general, a motorized bicycle can include a bike with a combustion motor, an electric bike (e-bike), a hybrid electric and combustion bike, a hybrid motor and pedal powered bike, and the like. Any tuned mass damper described anywhere herein may be sized and/or adapted to be suitable for use in any such vehicle.

Some embodiments address the problem of imperfect grip of a vehicle tyre to the ground. Introducing the tuned mass damper system may improve bike handling, for example, by increasing time that wheel spends on ground. A tuned mass damper may also help reduce sensation of chatter and increase comfort on fast repeated bumps.

In some embodiments, the tuned mass damper may be in the form of a self-contained cartridge that can be mounted inside a steerer tube of a suspension fork for example. Inside the cartridge, an optimized weight will move vertically with the movement of the bike. The mass will be returned to its original position with springs, and its movement will be slowed by a damping. The damping may either be a result of limiting oil or air movement around the mass to slow down its motion. This attenuated motion of the mass will help eliminate chatter on fast bumps, improving the rider's contact to the ground. Furthermore, it will increase comfort by reducing vibrations imparted to the rider. The characteristics of the system can be changed by changing the number of the weights, adjusting the spring or by restricting/reducing the air/liquid flow between one and the other side of the mass.

In some embodiments the TMD may be a self-contained unit that is mounted externally to a bike (e.g. the headtube or seat-tube), can be integrated into the frame, or can be installed inside the handlebar like a bar-end plug. The TMD can be mounted toward the front or rear of the bike, where it can help reduce chatter for various types of bikes, including but not limited to full suspension MTBs, hardtails, gravel bikes, road or city bikes. For the handlebar mounted TMD, the TMD may be installed at the outer extremes of the bar, and uses a rod-like mass who's oscillations are damped (by it sitting in an oil bath).

In various embodiments, a tuned mass damper may be either a self-contained device that can be attached to the inside of a vehicle frame, outside of the vehicle frame, or inside a steerer tube.

Depending on application area, the shape of a TMD may be optimized to fit in its installation area (e.g. steerer tube, externally, inside frame or externally to frame).

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

BRIEF DESCRIPTION OF THE DRAWINGS

Aspects of the present invention are illustrated by way of example, and not by way of limitation, in the accompanying drawings, wherein:

Figure 1A is a perspective view of a vehicle with at least one frequency adjustable tuned mass damper (TMD), in accordance with an embodiment.

Figure 1B is a perspective view of a frequency adjustable TMD system on the vehicle, in accordance with an embodiment.

Figure 2A is a schematic diagram of a vehicle, in accordance with an embodiment.

Figure 2B is a schematic diagram of the frequency adjustable TMD added to the vehicle, in accordance with an embodiment.

Figure 3A is a graph of magnitude versus frequency of a front fork assembly, in accordance with an embodiment.

Figure 3B is a graph of position versus time for the x-axis position of the front fork assembly during the forced vibration, in accordance with an embodiment.

Figure 4A is a table of equations for determining the proper mass, damping coefficient, and spring rate for a TMD, in accordance with an embodiment.

Figure 4B is a table of additional calculations for the TMD, in accordance with an embodiment.

Figure 5A is a front view of the handlebar with a frequency adjustable TMD, in accordance with an embodiment.

Figure 5B is a cross-sectional view of a frequency adjustable TMD optimized to fit within the handlebar, in accordance with an embodiment.

Figure 6A is a front sectional view of a frequency adjustable TMD with semi-active changing of the spring rate with a small volume configuration, in accordance with an embodiment.

Figure 6B is a front sectional view of the frequency adjustable TMD with semi-active changing of the spring rate with a middle volume configuration, in accordance with an embodiment.

Figure 6C is a front sectional view of the frequency adjustable TMD 100 with semi-active changing of the spring rate with a large volume configuration, in accordance with an embodiment.

Figure 7A is a front sectional view of a frequency adjustable TMD with a changing spring rate via a manual pressure changing configuration, in accordance with an embodiment.

Figure 7B is a front sectional view of a frequency adjustable TMD with a semi-active changing spring rate via a semi-active pressure changing configuration, in accordance with an embodiment.

Figure 8A is a front section view of a frequency adjustable TMD with semi-active control of the damping coefficient, in accordance with an embodiment.

Figure 8B is a cross section view of portion A-A of Figure 8A, in accordance with an embodiment.

Figure 9A is a perspective view of a frequency adjustable TMD with semi-active control of the damping coefficient, in accordance with an embodiment.

Figure 9B is a cross section view of the frequency adjustable TMD with semi-active control of the damping coefficient of Figure 9A, in accordance with an embodiment.

Figure 10A is a schematic diagram of a multi-modal TMD system, in accordance with an embodiment.

Figure 10B is a schematic diagram of another multi-modal TMD system, in accordance with an embodiment.

Figure 10C is a schematic diagram of another multi-modal TMD system, in accordance with an embodiment.

The drawings referred to in this description should be understood as not being drawn to scale except if specifically noted.

DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

User experience is often heavily influenced by the dynamic response and structural properties of one or more of the components of a vehicle they are operating. For example, the dynamic response (resonant frequency and damping ratio) and structural properties (stiffness and strength) for different components are not always isotropic and different frequencies will affect different parts of the human body in different ways. Embodiments disclosed herein provide a tuned mass damper (TMD) that is able to respond to various frequencies imparted to the various components while the vehicle is in use. That is, the TMD is able to reduce and/or change both expected and novel vibrational and/or resonant frequencies that occur while the vehicle is in use. In so doing, the TMD is able to provide a better user experience throughout various use cases. Also, various embodiments of the TMD disclosed herein are configured to improve grip by reducing unwanted oscillations in pressure on the ground, to improve suspension performance by eliminating increased stiction as the fork oscillates back and forth, and to capture energy.

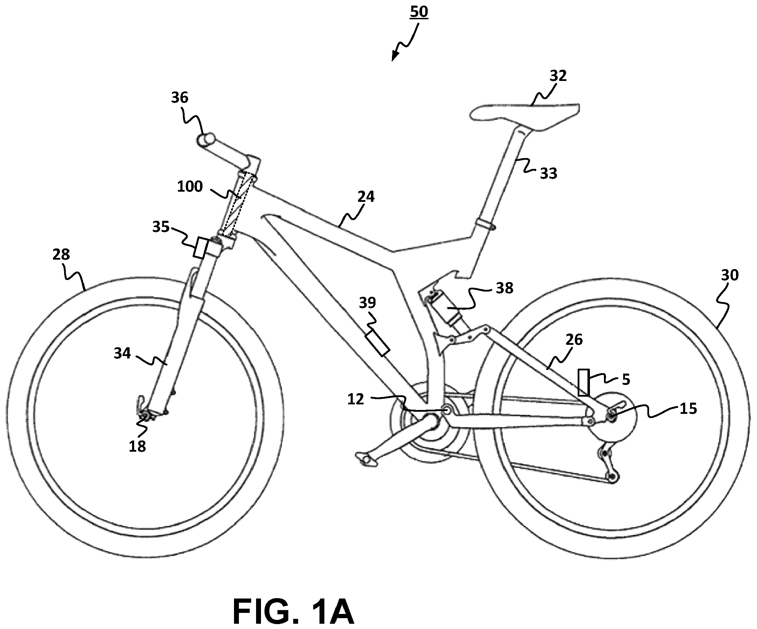

Referring now to Figure 1A, a perspective view of a vehicle 50 having a frequency adjustable TMD 100 incorporated therewith is shown in accordance with an embodiment. In one embodiment, vehicle 50 is a bicycle.

For purposes of clarity, a bicycle is utilized as the example vehicle 50. However, in another embodiment, one or more frequency adjustable TMDs could be used on one or more of a variety of vehicles such as, but not limited to, a bicycle, a motorized bicycle, a motorcycle, a watercraft (e.g., boat, jet ski, PWC, etc.), a snow machine, a single wheeled vehicle, a multi-wheeled vehicle, a side-by-side, an on-road and/or off-road vehicle, an aircraft, a personal light electric vehicle (PLEV), or the like. In general, a motorized bike can include a bike with a combustion motor, an electric bike (e-bike), a hybrid electric and combustion bike, a hybrid motor and pedal powered bike, and the like.

In one embodiment, one or more frequency adjustable TMDs could be used with a suspension inclusive device (instead of or in addition to a vehicle 50) such as, but not limited to an exoskeleton, a seat frame, a prosthetic, an orthotic, a suspended floor, and the like.

In one embodiment, vehicle 50 has a frame 24 with a suspension system comprising a swing arm 26 that, in use, is able to move relative to the rest of frame 24; this movement is permitted by, inter alia, rear shock assembly 38. The front fork assembly 34 also provides a suspension function via a shock assembly in at least one fork leg.

In one embodiment, vehicle 50 is a full suspension bicycle. In another embodiment, vehicle 50 has only a front suspension and no rear suspension (e.g., a hard tail). In different embodiments, vehicle 50 could be a road bike, a mountain bike, a gravel bike, an electric bike (e-bike), a hybrid bike, a motorcycle, or the like.

In one embodiment, swing arm 26 is pivotally attached to the frame 24 at pivot point 12. Although pivot point 12 is shown in a specific location, it should be appreciated that pivot point 12 can be found at a different location. In a hard tail bicycle embodiment, there would be no pivot point 12. In one embodiment of a hardtail bicycle, frame 24 and swing arm 26 would be formed as a fixed frame.

Vehicle 50 includes a front wheel 28 which is coupled with the front fork assembly 34 via axle 18. In one embodiment, a portion of front fork assembly 34 (e.g., a steerer tube) passes through the bicycle frame 24 and couples with handlebars 36. In so doing, the front fork assembly 34 and handlebars 36 are rotationally coupled with the frame 24 thereby allowing the rider to steer the vehicle 50. In one embodiment, the frequency adjustable TMD 100 is located within the steering tube.

In one embodiment, vehicle 50 includes a rear wheel 30 which is coupled to the swing arm 26 at rear axle 15. A rear shock assembly 38 is positioned between the swing arm 26 and the frame 24 to provide resistance to the pivoting motion of the swing arm 26 about pivot point 12. In one embodiment, a saddle 32 is connected to the frame 24 via a seatpost 33. In one embodiment, seatpost 33 is a dropper seatpost. In one embodiment, one or more of the fork shock assembly, rear shock assembly 38, seatpost 33, handlebars 36, and/or the like include one or more active damping components (e.g., live valves).

In one embodiment, vehicle 50 includes one or more sensors, smart components, or the like. In one embodiment, a sensor 5 is positioned proximate the rear axle 15 of vehicle 50. In another embodiment a sensor 35 is positioned proximate to front fork 34. In yet another embodiment, both sensor 5 and sensor 35 are on vehicle 50.

In general, one or more sensors (such as sensor 5 and/or 35) and/or smart components are used to identify and/or monitor characteristics (or changes to characteristics) such as terrain, environment, temperature, vehicle speed, vehicle pitch, vehicle roll, vehicle yaw, component activity, or the like. It is understood that the one or more sensors may be imbedded, moved, mounted, or the like, in any suitable configuration and allowing for any suitable range of adjustment as may be desirable. Although a number of sensors are shown in Figure 1A, it should be appreciated that there may be only a single sensor or more than two sensors in operation.

In general, the sensor(s) may be any suitable force or acceleration transducer (e.g. strain gage, Wheatstone bridge, accelerometer, hydraulic, interferometer based, optical, thermal or any suitable combination thereof). The sensor(s) may utilize solid state electronics, electro-mechanical principles or MEMS, or any other suitable mechanisms. In one embodiment, the sensor comprises a single axis self-powered accelerometer, such as for example ENDEVCO® model 2229C.

In one embodiment, the one or more of the sensors are a single axis accelerometer, a triaxial accelerometer, a measurement type sensor such as an infrared based time of flight sensor, a radar, 2D and 3D imager, ultrasonic sensor, photoelectric sensor, LiDar, and the like. In one embodiment, the measurement type sensor is a STMicroelectronics sensor and specifically STMicroelectronics sensor model VL53L0X.

In one embodiment, the angular orientation of one or more sensors is movable through a given range, thereby allowing alteration of a force component sensed by the sensor in relation to a force (vector) input. In one embodiment, the value for the range is approximately 120°. In one embodiment, the value for the range is approximately 100°. It is understood that the sensor can be moved or mounted in any suitable configuration and allowing for any suitable range of adjustment as may be desirable. That is useful for adjusting the sensitivity of the sensor to various anticipated terrain and bicycle speed conditions. For example, the bicycle speed affects the vector magnitude of a force input to the bicycle wheel for constant amplitude terrain disparity or "bump/dip." Varying size bumps and dips also affect the vector input angle to the wheel for constant bicycle speed.

One or more sensor(s) may be attached to the swing arm 26 directly, to any link thereof, to an intermediate mounting member, to front fork 34, or to any other portion or portions of the vehicle 50 as may be useful. In one embodiment, a sensor is fixed to an unsprung portion of the vehicle 50, such as for example the swing arm assembly 26. In one embodiment, the sensor is fixed to a sprung portion of the vehicle 50, such as the frame 24. In general, one or more sensors may be integrated with other vehicle structure, suspension components, suspension component controller(s) and data processing system, and the like, as disclosed in U.S. Patent 10,036,443 which is incorporated by reference herein, in its entirety.

In one embodiment, the sensor data is provided to a controller 39. In one embodiment, controller 39 uses the sensor data to make adjustments to the frequency adjustable TMD 100. In one embodiment, controller 39 makes adjustments to the frequency adjustable TMD 100 by signaling a modification be performed on one or more of the spring rate, mass, and/or damper characteristics of the frequency adjustable TMD 100 as described herein. In one embodiment, instead of being a separate controller 39 component, the sensor data is provided to the frequency adjustable TMD 100 which will include a controller similar to controller 39.

In one embodiment, controller 39 uses the sensor data to make suspension adjustments. In one embodiment, suspension controller 39 makes suspension adjustments to one or more of the shock assemblies of vehicle 50 having active damping components (e.g., live valves). See, as an example, the electronic valve of U.S. Patent 9,353,818 which is incorporated by reference herein, in its entirety, as further example of different types of "electronic", "live", or "active" valves).

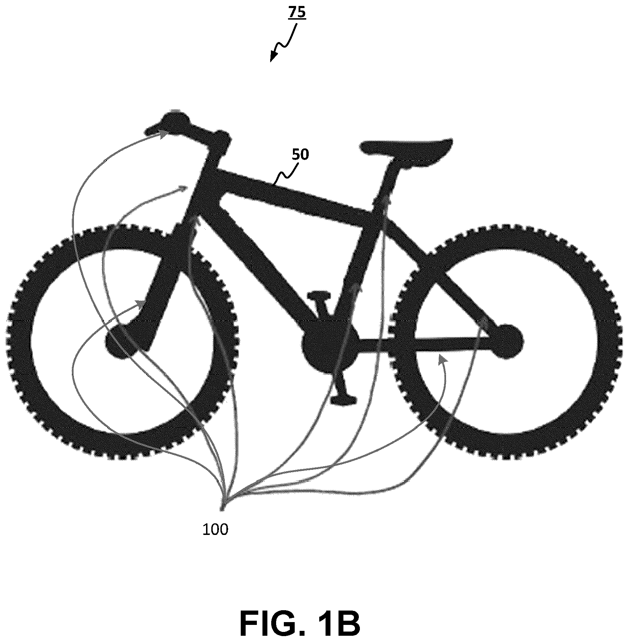

Figure 1B is a perspective view of a TMD system 75 on the vehicle 50, in accordance with an embodiment. In general, the TMD system 75 includes one or more TMD 100. It is understood that the one or more TMD 100 may be imbedded, moved, mounted, or the like, in any suitable configuration and allowing for any suitable range of adjustment as may be desirable. Although a number of TMD 100 locations are shown in Figure 1B, it should be appreciated that there may be only one frequency adjustable TMD 100 or more than one frequency adjustable TMD 100 in operation along with none or some non-frequency adjustable TMDs. Moreover, although a few TMD 100 locations are shown, embodiments are well suited to fewer TMD 100 locations, more TMD 100 locations, and/or different TMD 100 locations as discussed herein.

With reference now to Figures 1A and 1B, in one embodiment, TMD 100 is a self-contained unit that can be mounted or coupled (e.g., externally, internally, and/or integrated) with one or more vehicle components. Again, although a few TMD 100 locations are shown, embodiments are well suited to fewer TMD 100 locations, more TMD 100 locations, and/or different TMD 100 locations. For example, there may be a TMD 100 located at and/or coupled with one of, a plurality of, or each location such as, but not limited to handlebar 36, steerer tube of fork assembly 34, the fork assembly 34, the fork lower, the brake caliper, near the front axle and/or rear axle, with the fork arch, the fork crown, the rear shock assembly, the bottom bracket, by the head tube of frame 24, the seat tube of frame 24, the seatpost 33, chain stay portion of swing arm 26, seat stay portion of swing arm 26, or the like.

The frequency adjustable TMD 100 can be mounted toward the front or rear of vehicle 50, to reduce chatter for bicycles such as, but not limited to, full suspension MTBs, hardtails, gravel bikes, road or city bikes, e-bikes, and the like. In one embodiment, at least one TMD is coupled to the unsprung mass of a vehicle. In one embodiment, at least one TMD is coupled to the sprung mass of the vehicle.

In one embodiment, a plurality of TMD's are used by TMD system 75. For example, at least one frequency adjustable TMD 100 and at least one TMD are coupled with some, or each of handlebar 36, steerer tube of fork assembly 34, by the head tube of frame 24, the seat tube of frame 24, the seatpost 33, chain stay portion of swing arm 26, seat stay portion of swing arm 26, the fork assembly, the rear shock assembly, the bottom bracket, or the like. In one embodiment, a plurality of frequency adjustable TMD 100 are coupled with two or more components such as, handlebar 36, steerer tube of fork assembly 34, by the head tube of frame 24, the seat tube of frame 24, the seatpost 33, chain stay portion of swing arm 26, seat stay portion of swing arm 26, the fork assembly, the rear shock assembly, the bottom bracket, or the like.

In one embodiment, the shape of frequency adjustable TMD 100 is optimized to fit in its installation area (e.g. handlebar, steerer tube, fork assembly, fork lower, fork crown, near axles, rear shock assembly, externally, inside frame or externally to frame, or the like,) while maintaining its ability to operate within the desired range of frequencies.

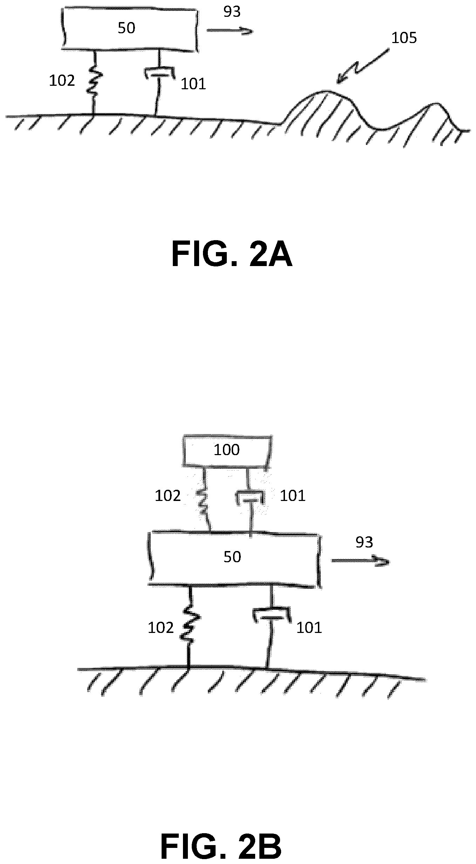

With reference now to Figure 2A, a schematic diagram of a vehicle 50 is shown in accordance with an embodiment. Vehicle 50 is traveling along the terrain in direction 93. When the vehicle 50 is in motion it will incur some amount of vibrational energy. In other words, as the vehicle moves across the terrain and encounters events 105, the system will be excited and it will start to oscillate due to the introduction of the operationally incurred vibrational energy.

Vehicle designers and manufacturers work to ensure that many components and the vehicle as a whole will work toward dissipating the vibrational energy. For example, components such as handlebars, forks, frames, swing arms and the like, are designed with a tradeoff between stiffness and flexibility. Deleteriously, if a component is too stiff it will not absorb any energy. Instead, when it encounters events 105 such as rocks, bumps, landings, curbs, gravel, whoops, rollers, dips, hills, and the like, it will pass that energy directly through the system and to the operator. In addition to providing a jarring ride to the operator, this will also cause traction and control issues for the vehicle 50 due to wheel bounce, wheel spin, chatter, moments of non-contact between a wheel and the ground, and the like. Moreover, without some amount of flex, when a larger event 105 is encountered (or events 105 are repeatedly encountered), one or more component of the vehicle 50 will crack, stress fracture, break, or the like.

To address this problem, an amount of flex (or damping features such as springs 102 and mass 101) are built into the vehicle 50 and component design to allow some of the event energy to damp or dissipate allowing the vehicle 50 to traverse similar terrain and events 105 without causing cracks, stress fractures, breaks, or the like. Depending upon the terrain and/or events 105 to be encountered, these damping features may also include components such as shock absorbers, rubber mounts, gas filled tires, springs, and the like, which are incorporated into the vehicle design and used to further damp, absorb, and/or dissipate the energy introduced by the motion of the vehicle and any event encounters.

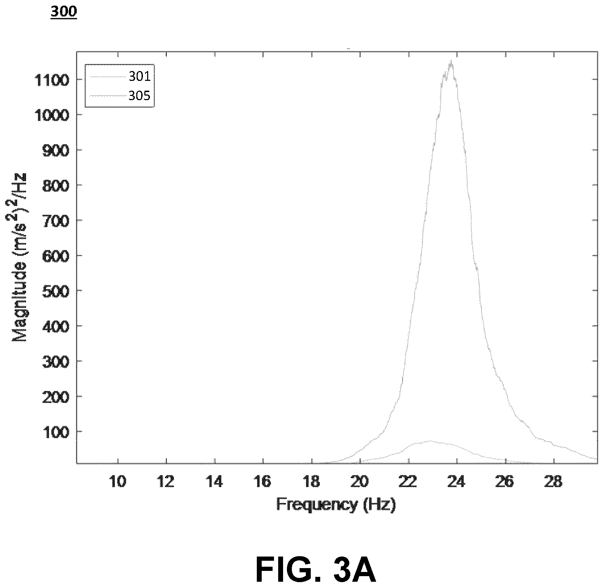

However, any of these components and possibly the vehicle as a whole is free to vibrate and will therefore have one or more natural frequencies. For example, in Figure 3A, a graph 300 of the magnitude versus frequency of a front fork assembly 34 is shown in accordance with an embodiment. To obtain the data, the front fork assembly 34 was subjected to a variation of frequencies. The plot 305 is the acceleration profile without any additional damping. Plot 301 is the acceleration profile with the addition of a TMD oscillating in a fore-aft direction.

From graph 300 it is clear that the natural frequency of the front fork assembly 34 is between 22-26 Hz and centered around 24 Hz. As such, when the forced vibration reached the natural frequency, resonance occurred causing the large magnitude spike in the non-damped component as shown by plot 305. However, by utilizing a TMD (tuned between 22-26 Hz) and mounted to the fork lower (e.g., an unsprung mass) the magnitude of the resonance peak is significantly decreased and the peak actually occurs at a lower frequency.

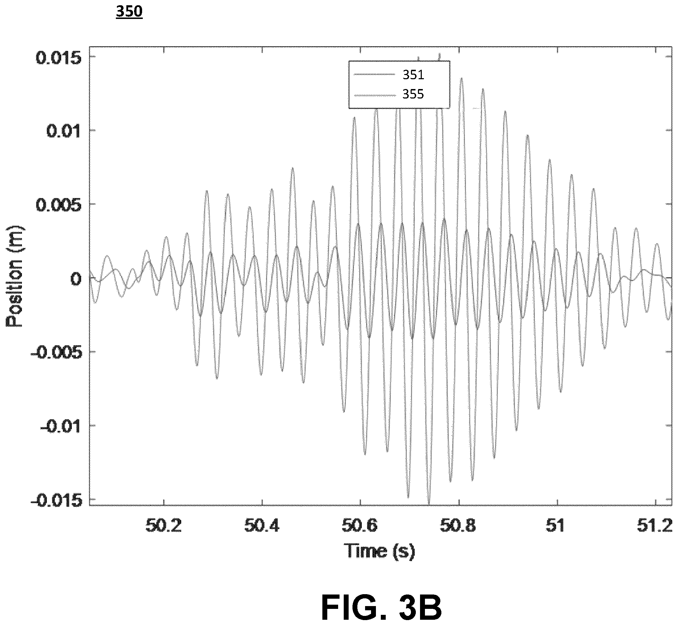

In Figure 3B, a graph 350 of position versus time for the x-axis position of the front fork assembly 34 during the forced vibration is shown in accordance with an embodiment. The plot 355 shows the fork x-axis position without a TMD. Plot 351 shows the fork x-axis position with the addition of the TMD oscillating in the fore-aft direction.

With reference now to Figure 2B, a schematic diagram of the frequency adjustable TMD 100 added to the vehicle 50 is shown in accordance with an embodiment. In general, the frequency adjustable TMD 100 is tuned by adjusting the mass, the spring, or the damping. In one embodiment, frequency adjustable TMD 100 will include adjustable features such as additional masses, and an adjustable damping rate and/or spring rate that is controlled electronically and/or by a user adjustable manual feature, such as a knob. In one embodiment, the frequency adjustable TMD 100 is initially adjusted to match the vehicle's (or component of the vehicle's) natural frequency and any changes to the frequency are performed on the fly to match (and therefore damp) the current real (or near-real) time operationally incurred vibrational energy.

Referring now to Figures 2B and 3A-3B, based on the data of graph 300 and graph 350 it is clear that utilizing the frequency adjustable TMD 100, tuned between 22-26 Hz, oscillating in the fore-aft direction, and mounted to the fork lower, the fore-aft position (e.g., X-axis) oscillation is reduced along with the magnitude of the resonance peak 300.

However, it should be appreciated that while advantageous mass spring and damper combinations can be employed to reduce targeted modes, incorrect mass, spring, damper combinations can have adverse effects including making oscillations worse.

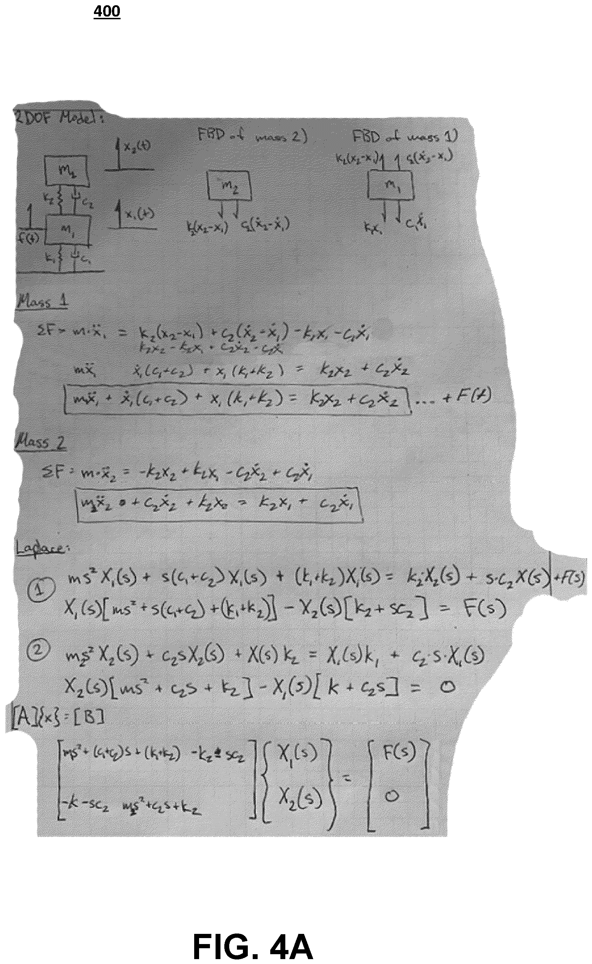

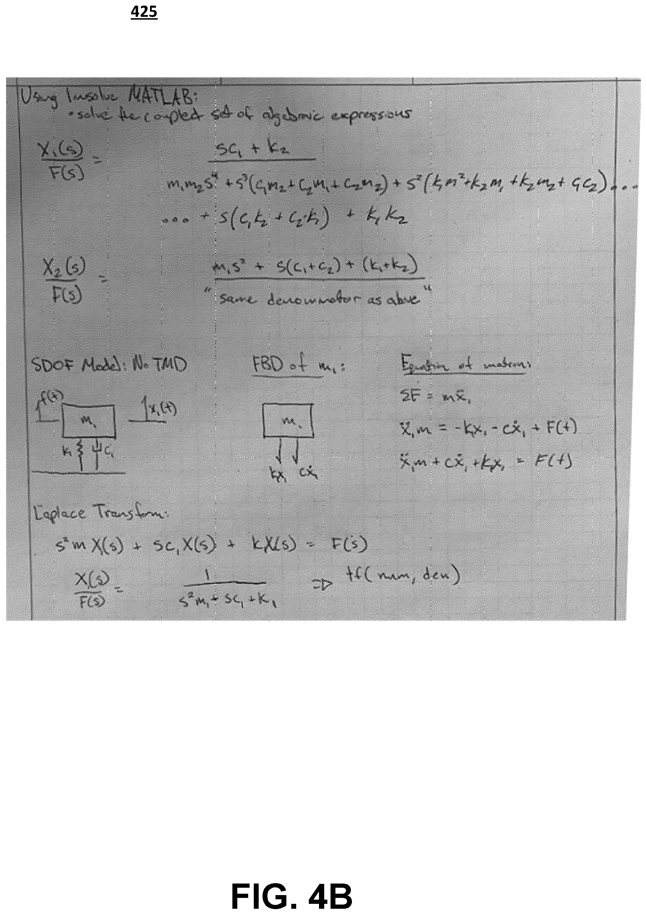

Figure 4A is a table of equations 400 for determining the proper mass, damping coefficient, and spring rate for a TMD working on a given object (e.g., mass 1 or vehicle 50 of Figure 2B) shown in accordance with an embodiment. Figure 4B is a table 425 of additional calculations for the TMD in accordance with an embodiment.

The result is the formula for adjusting the frequency adjustable TMD 100.

$$f(t) = M\ddot{x} + C\dot{x} + Kx$$

$$M\ddot{x} = f(t) - C\dot{x} - Kx$$

$$\ddot{x} = \frac{f(t) - C\dot{x} - Kx}{M}$$

Where f(t) is the input force, M is the mass, C is the damping coefficient, and K is the spring rate.

Thus, for a given input force, the acceleration (that results in vibration) can be reduced by adjusting one, some, or each of the damping, the spring rate, and/or the mass of the frequency adjustable TMD 100.

In other words, in its fundamental form the TMD exists as a spring, mass, and damper. The spring may be a cantilever, helical, extension, compression, air, or the like. The mass may be any desired or undesired mass, e.g., dead weight, magnet stack, existing internal mass, or the like. The damper may be any damping mechanism (electromagnetic, viscous damping, etc.). Thus, it is not a specific mass or a specific spring rate or specific damper in isolation, but the specific spring, damper, and mass combination that allows a selected vibration mode to be targeted and eliminated.

As discussed herein, the problem with existing TMDs is the inability to provide multi-mode and/or active frequency adjustability. That is, while a power spectral density (PSD) plot of collected acceleration data can be constructed to better understand the undesirable vibration modes on a vehicle or its components (such as shown in Figure 3A). The PSD plot will not include real-time unwanted vibration modes that actually occur on a specific trail, due to specific events 105, specific terrain, specific vehicle builds and component combinations, specific rider styles, and the like. Real-time unwanted vibration modes that lead to poor vehicle traction, muscle fatigue, limited rider confidence, perceived discomfort, etc.

For example, when a frequency adjustable TMD 100 is used in a handlebar 36, front fork 34, or the like. The structure will have some known oscillation resonant frequencies. For example, the fork assembly has a known length and a known mass at an end thereof. Thus, the oscillations of the fork assembly during normal operation will be known and the frequency adjustable TMD 100 can be pre-tuned to damp those expected oscillations.

However, there will also be oscillations that are induced by the terrain being traversed. For example, trail breaking bumps, whoop section, etc. These terrain features (or events 105) will introduce real-time unwanted vibration modes that are different than the expected frequency oscillations, but can also be addressed by the frequency adjustable TMD 100.

In general, the location of negatively perceived vibrations can exist or permeate through any medium of the vehicle 50, therefore the frequency adjustable TMD 100 may be located on the sprung or unsprung mass of the vehicle 50. Examples of unsprung mounting locations include brake mount bosses, front or rear axles, front fork lower legs, etc. Examples of sprung mounting locations include frame mounting holes, bottom bracket, handlebars, etc.

For example, the frequency adjustable TMD 100 could be used to reduce and/or eliminate vibrations such as from cobbled streets, gravel, and the like. In one embodiment, by reducing and/or eliminating the terrain induced vibrations vehicle performance issues such as wheel bounce, wheel spin, chatter, and the like will be reduced; which will result in better grip, traction, handling, and the like, for the vehicle.

In a hard tail bike, the frequency adjustable TMD 100 will help reduce and/or eliminate vibrations in the rear where there is no suspension. In a suspension portion (e.g., the front, or a full suspension vehicle), the frequency adjustable TMD 100 will also help reduce and/or eliminate residual vibrations (e.g., working in conjunction with the shock assembly).

It should further be appreciated that there may be a plurality of frequency adjustable TMDs mounted at different locations and performing one or both of user specific (e.g., handlebar, saddle, frame, pedal, etc.) and vehicle specific (e.g., grip, wheel bounce, wheel spin, chatter, traction, handling, and the like) vibration and resonance characteristic adjustments.

Thus, the frequency adjustable TMD 100 addresses problems such as imperfect grip of a tire to the ground, the sensation of chatter, loss of comfort on fast repeated bumps, and the like. By utilizing the tuned mass damper system 75, vehicle handling is improved by increasing time that wheel(s) spend on ground, increasing operator confidence and comfort, and reducing chatter, bounce, jarring, loss of traction, and the like.

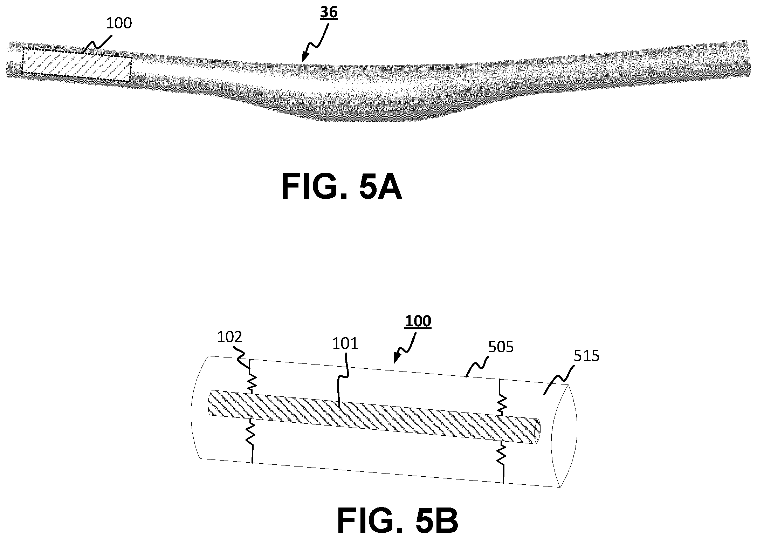

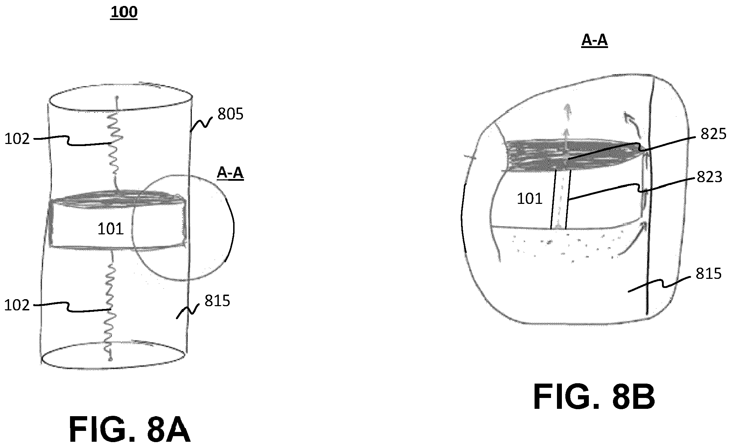

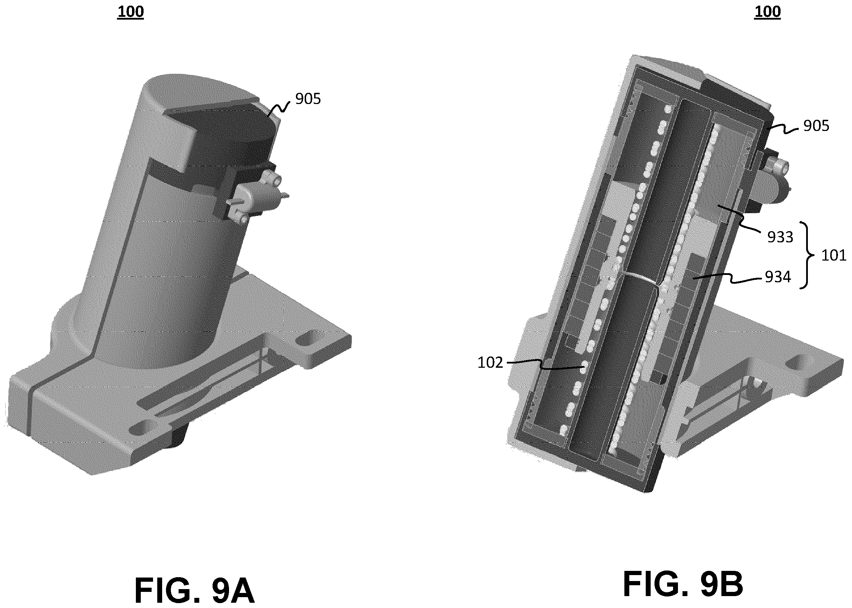

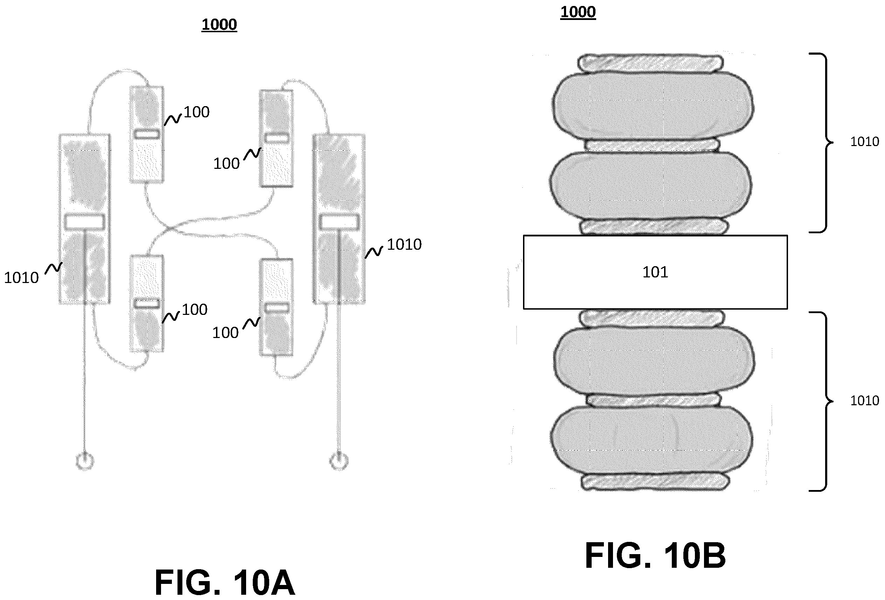

In one embodiment, the frequency adjustable TMD 100 is adjusted via semi-active changes to the spring rate, mass, and/or damper of the frequency adjustable TMD 100 as shown in Figures 5A-7B, via semi-active components within the frequency adjustable TMD 100 as shown in Figures 8A-8B, by a power generating frequency adjustable TMD 100 as shown in Figures 9A-9B, via a multi-modal set of TMD's working in combination as shown in Figures 10A-10C, and/or via a combination of two or more of the embodiments of Figures 5A-10C.

In one embodiment, a control system (similar to the controller 39 of Figures 1A-1B) is used to monitor the movement of the mass 101 within the frequency adjustable TMD 100 to ensure the magnitude of the oscillations do not become larger than the operation range of the frequency adjustable TMD 100. For example, the damping of the mass 101 in the frequency adjustable TMD 100 can be modified by changing the resistance of the coils, magneto resistive fluid, ports on the mass 101, etc. In general, the resistance could be set up to be optimal for a charging circuit, for a damping characteristic, or the like.

In one embodiment, magnet(s) are used to create a magnetic flux, when the magnet is pushing through the magnetic flux the coils cause the resistance. By adjusting the resistance caused by the coils, the movement of the magnet(s) through the magnetic flux is also adjusted. This resistance adjustment would allow the resistance of the frequency adjustable TMD 100 to be increased to slow the movement of the magnet(s) through the magnetic flux to ensure the mass does not impact the ends of the frequency adjustable TMD 100 during large magnitude events (e.g., jumps, landings, edge impacts, and the like.)

With reference now to Figure 5A, a front view of handlebar 36 is shown in accordance with an embodiment. Figure 5B, is a cross-sectional view of a frequency adjustable TMD 100 optimized to fit within the handlebar 36 in accordance with an embodiment.

Referring now to Figures 5A and 5B, in one embodiment, the handlebar mounted frequency adjustable TMD 100 is a self-contained cartridge mounted with or within the outer section of handlebar 36. In one embodiment, handlebar mounted frequency adjustable TMD 100 includes a cylinder type housing 505 to contain a rod-like mass 101 coupled with the housing 505 via springs 102. The oscillations of mass 101 are damped by the springs 102 and by the fluid 515 within housing 505.

In one embodiment, the fluid 515 is a smart fluid with an adjustable property (such as adjustable viscosity, surface tension, yield stress, or the like) such that the damping characteristics of the fluid 515 can be modified. In one embodiment, fluid 515 is a magnetorheological (MR) fluid and the property changes are adjusted and/or controlled by the application of a magnetic field. In one embodiment, fluid 515 is a electrorheological or (ER) fluid and the property changes are adjusted and/or controlled by the application of an electric field.

Thus, the frequency of the frequency adjustable TMD 100 is modified on the fly by changing the damping characteristics of the fluid 515. In one embodiment, the modifications are controlled by one or more components of the frequency adjustable TMD system 75 as described in Figure 1B.

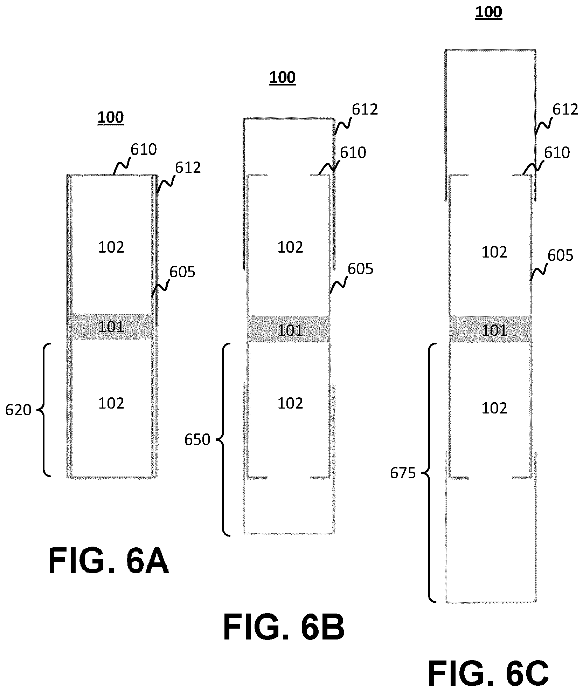

With reference now to Figure 6A, a front sectional view of a frequency adjustable TMD 100 with semi-active changing of the spring rate with a small volume 620 configuration is shown in accordance with an embodiment. In Figure 6B, a front sectional view of the frequency adjustable TMD 100 with semi-active changing of the spring rate with a middle volume 650 configuration is shown in accordance with an embodiment. In Figure 6C, a front sectional view of the frequency adjustable TMD 100 with semi-active changing of the spring rate with a large volume 675 configuration is shown in accordance with an embodiment.

With reference now to Figures 6A-6C, the frequency adjustable TMD 100 includes a mass 101 suspended between two air springs 102 within a chamber 605. However, the volume of the chamber 605 is changed by expanding or contracting ends 612. By adjusting the volume of the chamber 605, the spring rate (K) of the air springs 102 would be adjusted which would similarly adjust the damping frequency of the frequency adjustable TMD 100.

In one embodiment, the adjustment to the volume of the chamber 605 by expanding or contracting ends 612 is performed semi-actively. For example, a motor is used to extend or retract ends 612 to change the volume of the air chamber, and thus the spring rate, on the fly.

In one embodiment, the frequency adjustable TMD 100 is a self-contained cartridge, that is located (with or within) the steerer tube of the front fork 34, the leg of the front fork 34, the frame 24, handlebar 36, the head tube of frame 24, the seat tube of frame 24, the seatpost 33, chain stay portion of swing arm 26, seat stay portion of swing arm 26, or the like. In one embodiment, mass 101 is optimized for a given frequency range and will move vertically with the movement of the bike. The mass 101 will be returned to its original position with springs, and its movement will be slowed by a damping. In one embodiment, the damping is a result of limiting the air movement around the mass 101 to slow down its motion. This attenuated motion of the mass 101 will help eliminate chatter on fast bumps, improving the rider's contact to the ground. Furthermore, it will increase comfort by reducing vibrations imparted to the rider. In one embodiment, the adjustable range of the frequency adjustable TMD 100 can be changed by changing the mass 101, utilizing a different gas within the air shocks 102, or a combination thereof.

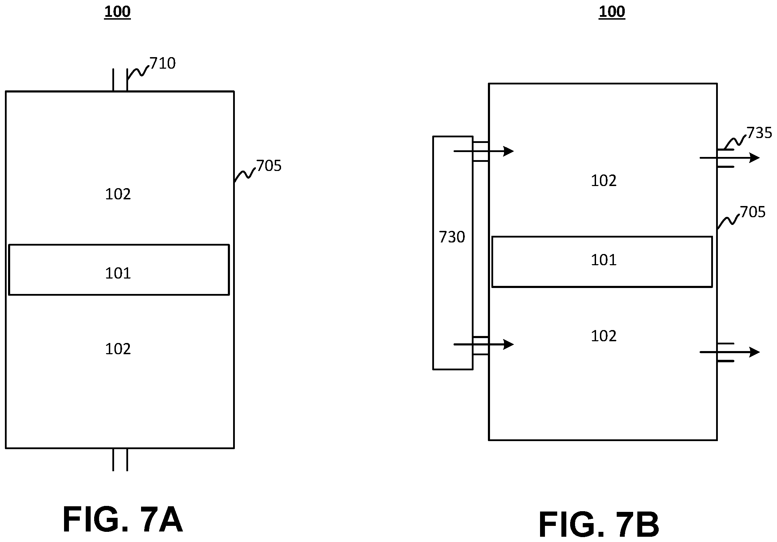

With reference now to Figure 7A, a front sectional view of a frequency adjustable TMD 100 with a changing spring rate via a manual pressure changing configuration is shown in accordance with an embodiment.

The frequency adjustable TMD 100 includes a mass 101 suspended between two air springs 102 within a chamber 705. In addition, at least one valve 710 (such as a Shrader valve, or the like), provides a manual capability to modify the pressure of the air springs 102 within the chamber 705. By modifying the pressure within the chamber 705, the spring rate (K) of the air springs 102 is adjusted which would similarly adjust the damping frequency of the frequency adjustable TMD 100.

Referring now to Figure 7B, a front sectional view of a frequency adjustable TMD 100 with a semi-active changing spring rate via a semi-active pressure changing configuration is shown in accordance with an embodiment.

Similar to Figure 7A, the frequency adjustable TMD 100 includes a mass 101 suspended between two air springs 102 within a chamber 705. However, in place of (or in addition to) the at least one valve 710 of Figure 7A, a compressor 730 is coupled with the chamber 705 to provide a semi-active (or automatic) capability to modify the pressure of the air springs 102 within the chamber 705. By semi-actively modifying the pressure within the chamber 705, the spring rate (K) of the air springs 102 is adjusted which would similarly adjust the damping frequency of the frequency adjustable TMD 100.

In one embodiment, chamber 705 also includes one or more exhaust valves 735. In one embodiment, there are no exhaust valves 735 as the valves used by the compressor 730 are also used to release air pressure.

In one embodiment, the compressor 730 is an on-vehicle air compressor system and is plumbed into the air shocks 102 of the frequency adjustable TMD 100 to allow the pressure in the air chamber 705 to be adjusted on the fly via the on-vehicle air compressor system controller. In one embodiment, the frequency adjustable TMD 100 of Figures 7A and 7B is similarly adjustable, operational, and located in one or more of the locations as disclosed in the discussion of the frequency adjustable TMD 100 in Figures 6A-6C.

In one embodiment, frequency adjustable TMD 100 could include a combination of the volume changing features of Figures 6A-6C in conjunction with the pressure changing features of Figures 7A-7B to adjust the spring rate of the air springs 102. In one embodiment, one or both of the volume changing and/or the pressure changing features is performed semi-actively.

With reference now to Figure 8A, a front section view of a frequency adjustable TMD 100 with semi-active control of the damping coefficient is shown in accordance with an embodiment. In Figure 8B, a cross section view of portion A-A of Figure 8A is shown in accordance with an embodiment.

With reference now to Figures 8A-8B, in one embodiment, the frequency adjustable TMD 100 is a self-contained chamber 805, that is located (with or within) the steerer tube of the front fork 34, the leg of the front fork 34, the frame 24, handlebar 36, the head tube of frame 24, the seat tube of frame 24, the seatpost 33, chain stay portion of swing arm 26, seat stay portion of swing arm 26, or the like. In one embodiment, mass 101 is optimized for a given frequency range and will move vertically with the movement of the bike. The mass 101 will be returned to its original position with springs 102, and its movement will be slowed by a damping.

In one embodiment, the damping is a result of limiting fluid 815 movement (e.g., oil, air, smart fluid, or the like) around the mass 101 to slow down its motion. In one embodiment, as shown in Figure 8B, mass 101 includes a flow path 823 with an active valve 825. By providing a flow path 823 controlled by a semi-active or automatically adjustable active valve 825, the limitations of the oil or air movement around mass 101 within the chamber 805 can be adjusted. In so doing, the adjustable damping coefficient (C) is used to modify the damping frequency of the frequency adjustable TMD 100. In one embodiment, the adjustable range of the frequency adjustable TMD 100 is changed by changing the mass 101, utilizing a different gas within the air shocks 102, or a combination thereof.

With reference now to Figure 9A, a perspective view of a frequency adjustable TMD 100 with semi-active control of the damping coefficient is shown in accordance with an embodiment. In Figure 9B, a cross section view of the frequency adjustable TMD 100 with semi-active control of the damping coefficient of Figure 9A is shown in accordance with an embodiment.

With reference now to Figures 9A-9B, in one embodiment, the frequency adjustable TMD 100 is a self-contained chamber 905, that is located (with or within) the steerer tube of the front fork 34, the leg of the front fork 34, the frame 24, handlebar 36, the head tube of frame 24, the seat tube of frame 24, the seatpost 33, chain stay portion of swing arm 26, seat stay portion of swing arm 26, or the like.

In one embodiment, frequency adjustable TMD 100 employs a linear compression spring 102, the mass 101 is a mover generally characterized as those used by an electromagnetic generator and consists of a sliding surface 933 and a purposely oriented magnet stack 934. In one embodiment, the electromagnetic generator is linear. In another embodiment, the electromagnetic generator is rotary. The damper is electromagnetic, and in one embodiment is controlled via external resistance and coil geometry. In one embodiment, the spring 102 is a compression spring, tension spring, air spring, or the like.

In one embodiment, mass 101 is optimized for a given frequency range and will move vertically with the movement of the bike. The mass 101 will be returned to its original position with springs 102, and its movement will be slowed by the electromagnetic damping. Although, in one embodiment, the mass moves vertically with the movement of the bike, in another embodiment, the mass could be oriented in any direction. In one embodiment, the orientation is dependent upon the resonant mode.

In one embodiment, the adjustable damping coefficient (C) is used to modify the damping frequency of the frequency adjustable TMD 100.

In one embodiment, frequency adjustable TMD 100 will also generate power. As such, in addition to providing damping, the movement of mass 101 will allow energy to be harvested from the mass 101 movement and damping. In one embodiment, the energy harvested by frequency adjustable TMD 100 is provided to a wireless shock to provide power to the shock communications and/or active valve systems. In one embodiment, the energy is provided to a controller 39 to power to the controller's communications systems, processors, or the like. In one embodiment, the energy is provided to one or more sensors, to a battery, to a head/tail light, to compressor 730, to a charging port, and/or to one or a combination of power consuming and/or storing components.

With reference now to Figure 10A, a schematic diagram of a multi-modal TMD system 1000 is shown in accordance with an embodiment. In general, multi-modal TMD system 1000 utilizes two or more shock assemblies 1010 cross linked with a plurality of TMDs 100. In one embodiment, one, some, or all of the TMDs are frequency adjustable TMD 100. In one embodiment, one, some, or all of the frequency adjustable TMDs 100 are power generating such as shown in Figures 9A and 9B.

In one embodiment, the spring portions of the frequency adjustable TMD 100 that are coupled with the shock assemblies 1010 will act as a reservoir and as such, contain hydraulic fluid. For example, the upper two frequency adjustable TMDs would act as upper reservoirs (such as for compression strokes) and the lower two frequency adjustable TMDs would act as lower reservoirs (such as for rebound strokes). In contrast, the spring portions of each frequency adjustable TMD 100 coupled with another frequency adjustable TMD 100 will include a gas such as air, nitrogen, or the like.

In one embodiment, one, some, or all of the connections between each frequency adjustable TMD 100 will include valves to engage/disengage. In one embodiment, one or more of the valves will be active valves. By linking the systems with one or multiple valves, the multi-modal TMD system 1000 will be able to engage (e.g., be crosslinked) for on-road control and disengage for off-road operations. By using active valves, the engaging and disengaging would be able to be controlled by a controller, an in-vehicle infotainment (IVI) system, or the like. In one embodiment, the engagement/disengagement would be automatic as determined by a controller. In one embodiment, the engagement/disengagement would be performed by the controller after a command was input by an operator.

In one embodiment, multi-modal TMD system 1000 will include a compressor such as compressor 730 of Figure 7B to control the roll, change the shock assembly ride height, modify the frequency of the frequency adjustable TMD 100, and the like.

In one embodiment, one, some, or all of the connections between each frequency adjustable TMD 100 and the shock assemblies 1010 will include valves. In one embodiment, one or more of the valves will be active valves. By linking the systems with one or multiple valves, the multi-modal TMD system 1000 will be able to provide roll control combined with damping.

With reference now to Figure 10B, a schematic diagram of a multi-modal TMD system 1000 is shown in accordance with an embodiment. In general, multi-modal TMD system 1000 utilizes two or more shock assemblies 1010 (such as airbags, or the like) acting as the spring and the mass 101 is located therebetween. In general, the operation of multi-modal TMD system 1000 is similar to that disclosed in the discussion of Figures 6A-9B which is incorporated by reference herein in its entirety and is not repeated for purposes of clarity.

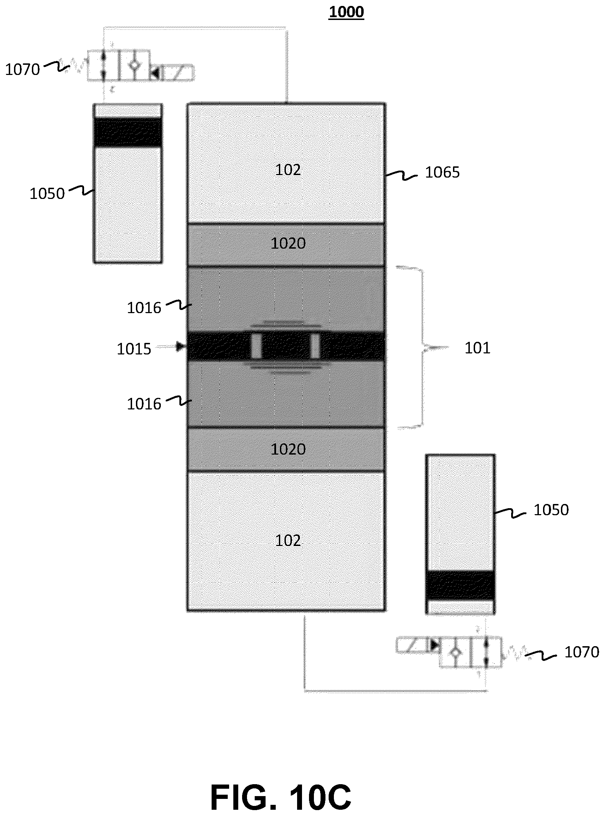

Referring now to Figure 10C, a schematic diagram of a multi-modal TMD system 1000 is shown in accordance with an embodiment. In general, multi-modal TMD system 1000 includes a chamber 1065 including a spring 102 portion (e.g., mechanical, gas, or a combination thereof) at a top and bottom thereof, and a mass 101. In one embodiment, the mass 101 includes a fluid 1016 (e.g., oil or the like) filled middle section, and an optional fixed passive or semi-active damping component 1015 located therein. In one embodiment, the fluid 1015 (making up the mass 101) is separated from the spring 102 portions by internal floating pistons (IFPs) 1020.

In one embodiment, the spring 102 portions are coupled with extra volume ('evol') containers (e.g., evol 1050). In one embodiment, the two different spring 102 portions can be tuned to target two different frequencies. For example, in one embodiment, the multi-modal TMD system 1000 can isolate an off-road wheel hop frequency (such as, for example, 10 Hz). In one embodiment, if a larger amplitude is needed for the multi-modal TMD system 1000, valve 1070 is opened to reduce the effective K (similar to changing the volume as discussed in reference to Figures 6A-6C herein) and thereby lowering the off-road frequency of the multi-modal TMD system 1000.

In one embodiment, the multi-modal TMD system 1000 will also isolate an on-road road roughness frequency (such as, for example, 30 Hz). In one embodiment, if a lower amplitude is needed for the multi-modal TMD system 1000, valve 1070 is closed to increase the effective K (similar to changing the volume as discussed in reference to Figures 6A-6C herein) and thereby increasing the on-road frequency of the multi-modal TMD system 1000.

In general, in a typical TMD the mass 101 must be large enough to effectively work with the damper to dissipate the energy. However, in some vehicle situations, such as road bikes, high performance vehicles, and the like, weight is a critical factor. As such, the inclusion of any added mass is judiciously applied.

However, by utilizing damping fluid that typically exists within a damper for a TMD, as a significant portion of the mass 101, the TMD system 1000 will provide the damping functionality with a minimum amount of weight being added to the vehicle.

In one embodiment, mass 101 of multi-modal TMD system 1000 will include a fluid pathway and active valve control to modify the amount of fluid 1016 within mass 101 thereby modifying the mass to change the damping frequency of the multi-modal TMD system 1000.

In one embodiment, multi-modal TMD system 1000 is mounted to a shock body as a reservoir. In one embodiment, if it is mounted to the shock upright, it will target damped vibration. In contrast, if it is mounted to the shock in an inverted configuration, it will target undamped vibration.

Thus, during the ride, the terrain could include repeatable events 105 such as stones, divots, washboard, whoops, bumps, and the like which would introduce new and unexpected frequencies to the vehicle 50 which would be addressed by the frequency adjustable TMD 100.

However, in one embodiment, frequency adjustable TMD 100 will also be able to adjust the damping frequency due to other events such as, but not limited to, the user changing their grip strength, standing on the pedals, lowering the dropper seatpost, etc. For example, the rider might change their style based on different terrain, speed, g-forces, acceleration, hill climbing, sprinting, and the like.

Although the change in riding style may introduce a new and/or different oscillation and/or vibration, and/or magnitude, in one embodiment, by utilizing the sensor information to identify a short term change in riding style, the frequency adjustable TMD 100 will not change for a pre-defined or user defined period of time, or will change to address and reduce rider induced pedal bob, bouncing, wheel spin, and the like.

In one embodiment, after the sensors determined the rider returned to a normal riding position, the frequency adjustable TMD 100 would then change from controlling rider induced vibrations and return to dealing with terrain and/or event 105 induced vibrations and oscillations.

In one embodiment, the frequency adjustable TMD 100 is tuned such that the vibrational and/or resonant frequencies being damped are synchronized with the desires of the intended user. Similarly, the frequency adjustable TMD 100 can be tuned such that the damped frequency range includes a smaller window that better correlates with vibrational and/or resonant frequencies of the individual user, the rider style, for better feedback/feel, or the like. In one embodiment, the fine tuning could occur over one or more rides, could be stored in a memory, could be different for different terrain, temperature, performance, and the like.

For example, the user could establish different damping frequency ranges for road, gravel, sand, dirt, etc. These different damping frequency ranges could be stored in the controller 39, the user's mobile device, a memory of the frequency adjustable TMD 100, or the like. When the user is going for a ride, they would select the appropriate tune for the given circumstances. Moreover, if the ride changed, e.g., from dirt to paved road, cold to warmer, high speed to cool down, etc., the user could manually select (or the frequency adjustable TMD system 75) could automatically initiate a different frequency damping tune based on the changed parameters.

As a result, the frequency adjustable TMD 100 is able to automatically (and or with input from the user) change the felt vibrations, frequency range being damped, and the like.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims.

Reference throughout this document to "one embodiment", "certain embodiments", "an embodiment", "various embodiments", "some embodiments," and the like, means that a particular feature, structure, or characteristic described in connection with that embodiment is included in at least one embodiment. Thus, the appearances of such phrases in various places throughout this specification may be referring to the same embodiment, to different embodiments, to combinations of embodiments, or the like.

Furthermore, in some embodiments, the particular features, structures, or characteristics of an embodiment are not combined with one or more other features, structures, or characteristics of one or more other embodiments. In another embodiment, the particular features, structures, or characteristics of some embodiment may be combined in any suitable manner with one or more other features, structures, or characteristics of one or more other embodiments. In yet another embodiment, the particular features, structures, or characteristics of any embodiment may be combined in any suitable manner with one or more other features, structures, or characteristics of one or more other embodiments without limitation.

**Claims**

1. A vehicle comprising a tuned mass damper (TMD), which tuned mass damper comprises:

   a mass;
   at least one spring coupled with said mass, said at least one spring having a spring rate; and
   a damper to dampen a motion of said mass, said damper comprising a damping coefficient, wherein at least one of said spring rate and said damping coefficient are adjustable during the vehicle's operation to modify a frequency damped by said TMD.

2. The vehicle of Claim 1, wherein both said spring rate and said damping coefficient are adjustable during said vehicle's operation to modify said frequency damped by said TMD.

3. The vehicle of Claim 1 or 2, further comprising:
   a controller configured to receive sensor information and determine said modified frequency.

4. The vehicle of Claim 1, 2 or 3, further comprising:
   an active component coupled with said TMD, said active component configured to electronically adjust at least one of said spring rate and said damping coefficient.

5. The vehicle of Claim 1, 2, 3 or 4, wherein:

   said at least one spring is an air spring;
   optionally wherein said spring rate of said air spring is adjustable by changing a volume of said air spring; and/or
   optionally wherein said spring rate of said air spring is adjusted by changing a pressure of a gas in said air spring.

6. The vehicle of any preceding Claim, wherein said damper comprises a fluid, and optionally wherein said damping coefficient of said fluid is adjustable by modifying a flow rate through a flow port in said mass, said flow rate modifiable by an active valve.

7. The vehicle of any preceding Claim, wherein said damper comprises a smart fluid with at least one adjustable property to change said damping coefficient, and optionally wherein said smart fluid is selected from a group consisting of: a magnetorheological (MR) fluid and an electrorheological (ER) fluid.

8. The vehicle of any preceding Claim, wherein said TMD is coupled with the vehicle at a location selected from a group consisting of: externally, internally, and integrated.

9. The vehicle of any preceding Claim, wherein said TMD is coupled with a shock assembly and is configured to act both as a fluid reservoir and said TMD.

10. The vehicle of any preceding Claim, wherein said mass comprises a sliding surface and a purposely oriented magnet stack; and
wherein said damper is electromagnetic, such that said TMD is configured to provide a tuned damping and to harvest energy with a movement of said mass.

11. The vehicle of Claim 10, wherein said TMD is adapted to provide harvested energy to a component other than said TMD.

12. The vehicle of any preceding Claim, wherein at least a portion of said mass is a damping fluid to dampen a motion of said mass, said damping fluid having a damping fluid damping coefficient, and optionally wherein said damping fluid damping coefficient is adjustable during said vehicle's operation to modify said frequency damped by said TMD.

13. The vehicle of Claim 12, wherein said damping fluid is shared from a shock assembly of the vehicle, and optionally wherein said TMD comprises at least one semi-active valve.

14. A suspension-inclusive device, such as an exoskeleton, a seat frame, a prosthetic, an orthotic, a suspended floor, a shock assembly, a fork, a handlebar or a vehicle frame, which suspension-inclusive device comprises a tuned mass damper having the tuned mass damper features of any of claims 1 to 13.

15. A tuned mass damper (TMD) for a vehicle, the TMD comprising:

    a mass;
    at least one spring coupled with said mass, said at least one spring having a spring rate; and
    a damper to dampen a motion of said mass, said damper comprising a damping coefficient, wherein at least one of said spring rate and said damping coefficient are adjustable during the vehicle's operation to modify a frequency damped by said TMD.

FIG. 1A

75

50

100

FIG. 1B

50

93

102 101

105

# FIG. 2A

100

102 101

50

93

102 101

# FIG. 2B

FIG. 3A

**FIG. 3B**

**400**

FIG. 4A

425

Using Insolve MATLAB:
• solve the coupled set of algebraic expressions

$$\frac{X_1(s)}{F(s)} = \frac{sc_1 + k_2}{m_1 m_2 s^4 + s^3(c_1 m_2 + c_2 m_1 + c_2 m_2) + s^2(k_1 m_2 + k_2 m_1 + k_2 m_2 + c_1 c_2) \ldots}$$

$$\ldots + s(c_1 k_2 + c_2 k_1) + k_1 k_2$$

$$\frac{X_2(s)}{F(s)} = \frac{m_1 s^2 + s(c_1 + c_2) + (k_1 + k_2)}{\text{"same denominator as above"}}$$

SDOF Model: No TMD          FBD of $m_1$:          Equation of motions

$$\Sigma F = m \ddot{x}_1$$

$$\ddot{x}_1 m = -k x_1 - c \dot{x}_1 + F(t)$$

$$\ddot{x}_1 m + c \dot{x}_1 + k x_1 = F(t)$$

Laplace Transform:

$$s^2 m X(s) + s c_1 X(s) + k X(s) = F(s)$$

$$\frac{X(s)}{F(s)} = \frac{1}{s^2 m_1 + s c_1 + k_1} \Rightarrow tf(num, den)$$

# FIG. 4B

FIG. 5A

FIG. 5B

EP 4 403 793 A1

FIG. 6A

FIG. 6B

FIG. 6C

FIG. 7B

FIG. 7A

805

102

A-A

101

102

815

**FIG. 8A**

825

823

101

815

**FIG. 8B**

905

**FIG. 9A**

905

933

101

934

102

**FIG. 9B**

EP 4 403 793 A1

**FIG. 10B**

**FIG. 10A**

**1000**

1070

1050

102 ~ 1065

1020

1016

1015

1016

101

1020

102

1050

1070

# FIG. 10C

Europäisches
Patentamt

European
Patent Office

Office européen
des brevets

**EUROPEAN SEARCH REPORT**

Application Number

EP 24 15 1453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 483 951 A (BONESHO JAMES A ET AL) 16 December 1969 (1969-12-16) | 1-4,8, 14,15 | INV. F16F7/104 |
| Y | * column 2, line 8 - line 11; figure 1 * | 5-7,12 | F16F15/00 |
| A | * column 2, line 68 - line 72 * | 9,13 | |
| | ----- | | |
| X | US 8 632 097 B1 (QUINN SHAWN G [US] ET AL) 21 January 2014 (2014-01-21) * paragraph [0149]; claim 21; figures 8a, 8b * | 1,10,11, 14,15 | |
| | ----- | | |
| Y | US 8 701 847 B2 (TEKNOS ATHANASIOS KONSTANTINOS [US]; VONG CHIN LIM [US] ET AL.) 22 April 2014 (2014-04-22) | 5 | |
| A | * column 4, line 50 - line 55; figure 3 * | 1 | |
| | ----- | | |
| Y | US 5 620 068 A (GARNJOST KENNETH D [US] ET AL) 15 April 1997 (1997-04-15) | 6,7,12 | |
| A | * claim 1; figures 1-4 * | 1,15 | |
| | ----- | | |

**TECHNICAL FIELDS SEARCHED (IPC)**

F16F

The present search report has been drawn up for all claims

| Place of search | Date of completion of the search | Examiner |
|---|---|---|
| The Hague | 7 June 2024 | Huyge, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 1453

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | | Publication date | Patent family member(s) | | Publication date |
|---|---|---|---|---|---|
| US 3483951 | A | 16-12-1969 | NONE | | |
| US 8632097 | B1 | 21-01-2014 | CN | 103723184 A | 16-04-2014 |
| | | | DE | 102013218267 A1 | 17-04-2014 |
| | | | US | 8632097 B1 | 21-01-2014 |
| US 8701847 | B2 | 22-04-2014 | CN | 102261422 A | 30-11-2011 |
| | | | DE | 102011006946 A1 | 01-12-2011 |
| | | | US | 2011290607 A1 | 01-12-2011 |
| US 5620068 | A | 15-04-1997 | DE | 4413447 A1 | 10-11-1994 |
| | | | GB | 2277360 A | 26-10-1994 |
| | | | JP | 3841450 B2 | 01-11-2006 |
| | | | JP | H07119791 A | 09-05-1995 |
| | | | US | 5456341 A | 10-10-1995 |
| | | | US | 5620068 A | 15-04-1997 |

EPO FORM P0459

For more details about this annex : see Official Journal of the European Patent Office, No. 12/82

**REFERENCES CITED IN THE DESCRIPTION**

**Patent documents cited in the description**

- US 63438496
- US 40968924
- US 10036443 B
- US 9353818 B